# EUROPÄISCHE PATENTSCHRIFT

(11) **EP 3 221 577 B1**
(45) Veröffentlichungstag und Bekanntmachung des Hinweises auf die Patenterteilung: **26.06.2019**
(21) Anmeldenummer: 15787551.9
(22) Anmeldetag: 27.10.2015
(51) Int. Cl.: F02M 59/44, F02M 59/10, F16C 33/20, F04B 1/04

(54) **PUMPE, INSBESONDERE EINE KRAFTSTOFFHOCHDRUCKPUMPE**
PUMP, IN PARTICULAR HIGH-PRESSURE FUEL PUMP
POMPE, EN PARTICULIER POMPE À CARBURANT À HAUTE PRESSION

(30) Priorität: 21.11.2014 DE 102014223795
(43) Veröffentlichungstag der Anmeldung: 27.09.2017
(73) Patentinhaber: Robert Bosch GmbH, 70442 Stuttgart (DE)
(72) Erfinder: MEIER, Gerhard, 73614 Schorndorf (DE); SCHETTER, Markus, Bangalore 560030 (IN)
(86) Internationale Anmeldenummer: PCT/EP2015/074874
(87) Internationale Veröffentlichungsnummer: WO 2016/078881

(56) Entgegenhaltungen:
- DE-A1-102010 063 363
- DE-A1-102011 075 479

## Beschreibung

### Stand der Technik

Die Erfindung geht aus von einer Pumpe, insbesondere Kraftstoffhochdruckpumpe, nach der Gattung des Anspruchs 1.

Eine solche Pumpe in Form einer Kraftstoffhochdruckpumpe ist durch die DE 10 2010 063 363 A1 bekannt. Diese Pumpe weist ein Pumpenelement mit einem Rollenstößel auf, über den sich ein Pumpenkolben an einem Nocken einer Antriebswelle abstützt. Im Rollenstößel ist auf einem Lagerbolzen eine Rolle drehbar gelagert, die auf dem Nocken anliegt. Die Rolle ist über eine Lagerbuchse auf dem Lagerbolzen gelagert. Die Lagerbuchse besteht üblicherweise aus einem Grundkörper aus Metall, insbesondere Stahl, der mit einer Beschichtung aus Gleitlagermaterial versehen ist. Die Herstellung der Lagerbuchse ist wegen der erforderlichen hochgenauen Bearbeitung und dem Aufbringen der Beschichtung aufwendig. Außerdem kann es zu ungleichmäßiger Pressungsverteilung in der Lagerbuchse zwischen dieser und der Rolle und/oder dem Lagerbolzen kommen, wobei sich in den Randbereichen der Lagerbuchse erhöhte Pressungen ergeben, so dass dort ein erhöhter Verschleiß der Lagerbuchse auftritt. Die bekannten Lagerbuchsen aus Stahl weisen nur schlechte Notlaufeigenschaften im Fall unzureichender Schmierung auf, so dass in diesem Fall ein starker Verschleiß der Lagerbuchse und/oder der Rolle und/oder des Lagerbolzens auftreten kann.

### Offenbarung der Erfindung

### Vorteile der Erfindung

Die erfindungsgemäße Pumpe mit den Merkmalen gemäß Anspruch 1 hat demgegenüber den Vorteil, dass die Lagerbuchse einfach herstellbar ist und durch die gegenüber Stahl höhere Elastizität des Kunststoffmaterials eine gleichmäßigere Pressungsverteilung ermöglicht ist.

In den abhängigen Ansprüchen sind vorteilhafte Ausgestaltungen und Weiterbildungen der erfindungsgemäßen Pumpe angegeben. In den Ansprüchen 2 bis 5 sind geeignete Kunststoffmaterialien für die Lagerbuchse angegeben. Die Weiterbildung gemäß den Ansprüchen 6 und 7 ermöglicht gute Notlaufeigenschaften für den Fall, dass eine unzureichende Schmierung der Lagerbuchse vorhanden ist. Durch die Ausbildung gemäß den Ansprüchen 8 bis 10 ist eine einfache Herstellung der Lagerbuchse gegeben.

### Zeichnung

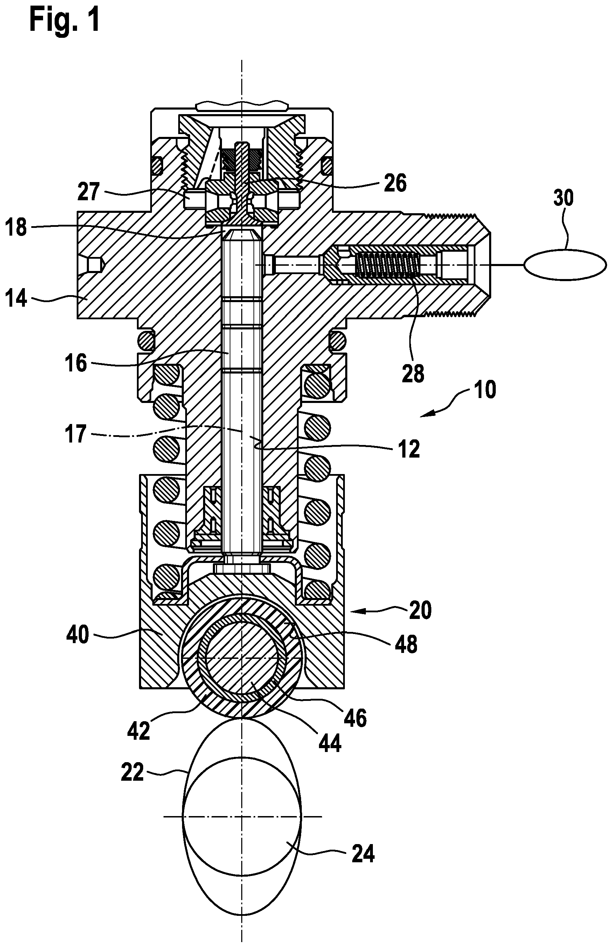

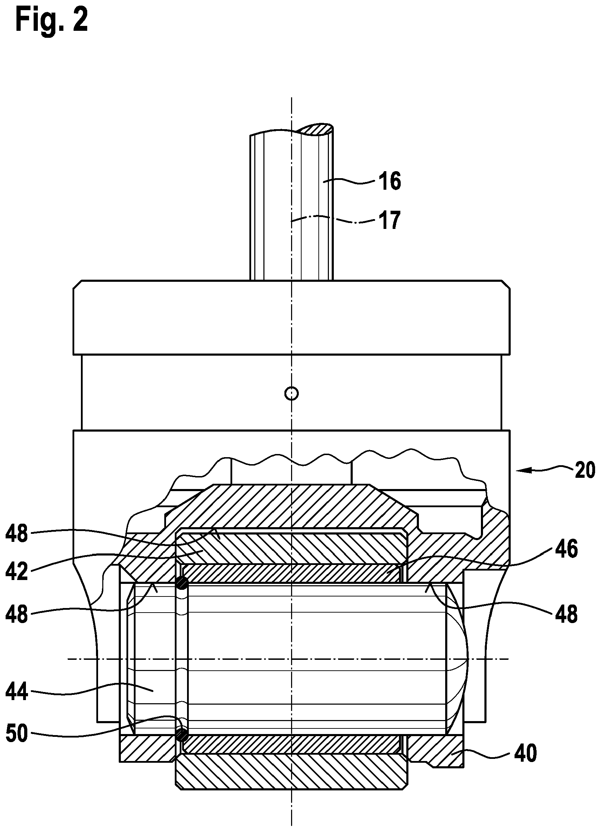

Ein Ausführungsbeispiel der Erfindung ist in der Zeichnung dargestellt und in der nachfolgenden Beschreibung näher erläutert. Es zeigen Figur 1 eine Pumpe in vereinfachter Darstellung in einem Längsschnitt und Figur 2 in vergrößerter Darstellung einen Ausschnitt eines Rollenstößels der Pumpe.

### Beschreibung des Ausführungsbeispiels

In Figur 1 ist eine Pumpe dargestellt, die insbesondere eine Kraftstoffhochdruckpumpe für eine Kraftstoffeinspritzeinrichtung einer Brennkraftmaschine ist. Die Pumpe weist wenigstens ein Pumpenelement 10 auf, das einen in einer Zylinderbohrung 12 eines Gehäuseteils 14 verschiebbar dicht geführten Pumpenkolben 16 aufweist. auf, das nachfolgend als Zylinderkopf bezeichnet wird. Der Pumpenkolben 16 begrenzt mit seinem in die Zylinderbohrung 12 ragenden Ende einen Pumpenarbeitsraum 18. Das aus der Zylinderbohrung 12 ragende Ende des Pumpenkolbens 16 ist mit einem Rollenstößel 20 verbunden. Der Rollenstößel 20 stützt sich an einem Nocken 22 einer Antriebswelle 24 ab, durch den bei der Drehbewegung der Antriebswelle 24 eine Hubbewegung des Pumpenkolbens 16 in der Zylinderbohrung 12 bewirkt wird. Die Antriebswelle 24 kann Teil der Pumpe sein oder Teil der Brennkraftmaschine, beispielsweise deren Nockenwelle oder eine andere Welle.

Der Pumpenarbeitsraum 18 ist über ein Einlassventil 26 mit einem Niederdruckzulauf 27 zur Pumpe und über ein Auslassventil 28 mit einem Hochdruckablauf verbindbar, der beispielsweise zu einem Hochdruckspeicher 30 führt. Der Niederdruckzulauf 27 kann beispielsweise von einer Förderpumpe, die Kraftstoff aus einem Vorratsbehälter ansaugt, gespeist werden.

Der Rollenstößel 20 weist einen hohlzylinderförmigen Stößelkörper 40 auf, in den auf dessen dem Nocken 22 abgewandter Seite das aus der Zylinderbohrung 12 herausragende Ende des Pumpenkolbens 16 hineinragt. Auf der dem Nocken 22 zugewandten Seite des Stößelkörpers 40 ist in diesem eine Rolle 42 drehbar gelagert, die auf dem Nocken 22 abrollt. Im Stößelkörper 40 ist ein Lagerbolzen 44 befestigt, auf dem die Rolle 42 über eine Lagerbuchse 46 drehbar gelagert ist. Der Stößelkörper 40 weist eine Bohrung 48 auf, die zumindest annähernd senkrecht zur Längsachse 17 des Pumpenkolbens 16 verläuft, wobei der Durchmesser der Bohrung 48 in deren in Längsrichtung gesehen mittlerem Bereich vergrößert ist und die Bohrung 48 in ihrem mittleren Bereich zum Nocken 22 hin offen ist. Der Lagerbolzen 44 kann in die Bohrung 48 an seinen Endbereichen eingepresst sein oder beispielsweise mittels eines federnden Sicherungsrings 50 in der Bohrung 48 gesichert sein, so dass dieser nicht in Richtung seiner Längsachse aus der Bohrung 48 herausgeschoben werden kann.

Die Lagerbuchse 46 ist hohlzylinderförmig ausgebildet und mit geringem radialem Spiel auf dem mittleren Bereich des Lagerbolzens 44 angeordnet. Auf der Lagerbuchse 46 ist mit geringem radialem Spiel die hohlzylinderförmige Rolle 42 gelagert. Die Rolle 42 ist dabei im mittleren Bereich der Bohrung 48 mit deren größerem Durchmesser angeordnet und ragt durch die offene Seite des mittleren Bereichs der Bohrung 48 heraus zum Nocken 22 hin. Die Lagerbuchse 46 ist aus einem Kunststoffmaterial hergestellt, vorzugsweise aus PEEK, Polyetheretherketon, oder aus PPA, Polyphtalamid. Als Kunststoffmaterial kann außerdem auch Polyimid, Polyamidimid oder PPS, Polyphenylensulfid verwendet werden.

Dem Kunststoffmaterial können Füllstoffe beigemischt sein, durch die insbesondere die Notlaufeigenschaften der Lagerbuchse 46 im Falle unzureichender Schmierung verbessert werden. Als Füllstoffe können beispielsweise Kohlefasern und/oder Glasfasern und/oder Kaliumtitanat und/oder Polyaramid verwendet werden. Außerdem können dem Kunststoffmaterial Füllstoffe beigemischt sein, die die Gleiteigenschaften der Lagerbuchse verbessern. Als Füllstoffe können hierzu beispielsweise Festschmierstoffpartikel, die Graphit enthalten können, verwendet werden. Als Zusatzstoffe können auch Titandioxid und/oder Zinksulfid und/oder Polytetraflourethylen verwendet werden.

Die Lagerbuchse 46 wird vorzugsweise in einem Spritzgießverfahren hergestellt, wobei nach dem Spritzgießprozess kein weiterer Fertigungsschritt erforderlich ist oder zumindest nur eine Bearbeitung des Innen- und/oder Außendurchmessers der Lagerbuchse 46 erforderlich ist. Alternativ kann die Lagerbuchse 46 auch in einem Pressverfahren hergestellt werden. Außerdem kann die Lagerbuchse 46 auch aus einem Stangenmaterial hergestellt werden, von dem Abschnitte mit der erforderlichen Breite abgetrennt werden.

## Patentansprüche

1. Pumpe, insbesondere Kraftstoffhochdruckpumpe, mit wenigstens einem Pumpenelement (10), das einen Rollenstößel (20) aufweist, in dem auf einem Lagerbolzen (44) über eine Lagerbuchse (46) eine Rolle (42) drehbar gelagert ist, die auf einem Nocken (22) einer Antriebswelle (24) abrollt, **dadurch gekennzeichnet, dass** die Lagerbuchse (46) aus einem Kunststoffmaterial hergestellt ist.

2. Pumpe nach Anspruch 1, **dadurch gekennzeichnet, dass** die Lagerbuchse (46) aus PEEK, Polyetheretherketon, hergestellt ist.

3. Pumpe nach Anspruch 1, **dadurch gekennzeichnet, dass** die Lagerbuchse (46) aus PPA, Polyphthalamid, hergestellt ist.

4. Pumpe nach Anspruch 1, **dadurch gekennzeichnet, dass** die Lagerbuchse (46) aus PPS, Polyphenylensulfid, hergestellt ist.

5. Pumpe nach Anspruch 1, **dadurch gekennzeichnet, dass** die Lagerbuchse (46) aus Polyimid oder Polyamidimid hergestellt ist.

6. Pumpe nach einem der Ansprüche 1 bis 5, **dadurch gekennzeichnet, dass** dem Kunststoffmaterial der Lagerbuchse (46) wenigstens ein Füllstoff zur Verbesserung der Notlaufeigenschaften der Lagerbuchse (46) bei geringer Schmierung beigefügt ist.

7. Pumpe nach Anspruch 6, **dadurch gekennzeichnet, dass** als Füllstoff Kohlefasern und/oder Glasfasern und/oder Kaliumtitanat und/oder Polyaramid und/oder Titandioxid und/oder Zinksulfid und/oder Graphit und/oder Polytetraflourethylen verwendet werden.

8. Pumpe nach einem der vorstehenden Ansprüche, **dadurch gekennzeichnet, dass** die Lagerbuchse (46) in einem Spritzgießverfahren hergestellt ist.

9. Pumpe nach einem der Ansprüche 1 bis 7, **dadurch gekennzeichnet, dass** die Lagerbuchse (46) in einem Pressverfahren hergestellt ist.

10. Pumpe nach einem der Ansprüche 1 bis 7, **dadurch gekennzeichnet, dass** die Lagerbuchse (46) als Abschnitt eines Stangenmaterials hergestellt ist.

## Claims

1. Pump, in particular a high-pressure fuel pump, having at least one pump element (10), which comprises a roller tappet (20), in which a roller (42), which rolls on a cam (22) of a drive shaft (24), is rotatably supported on a bearing pin (44) by way of a bearing bush (46), **characterized in that** the bearing bush (46) is made from a plastic material.

2. Pump according to Claim 1, **characterized in that** the bearing bush (46) is made from polyether ether ketone (PEEK).

3. Pump according to Claim 1, **characterized in that** the bearing bush (46) is made from polyphthalamide (PPA).

4. Pump according to Claim 1, **characterized in that** the bearing bush (46) is made from polyphenylene sulfide (PPS)

5. Pump according to Claim 1, **characterized in that** the bearing bush (46) is made from polyimide or polyamide imide.

6. Pump according to one of Claims 1 to 5, **characterized in that** at least one filler is added to the plastic material of the bearing bush (46) to improve the emergency running characteristics of the bearing bush (46) in the event of inadequate lubrication.

7. Pump according to Claim 6, **characterized in that** carbon fibers and/or glass fibers and/or potassium titanate and/or polyaramid, and/or titanium dioxide and/or zinc sulfide and/or graphite and/or polytetrafluoroethylene are used as filler.

8. Pump according to one of the preceding claims, **characterized in that** the bearing bush (46) is produced by an injection molding method.

9. Pump according to one of Claims 1 to 7, **characterized in that** the bearing bush (46) is produced by a method of pressing.

10. Pump according to one of Claims 1 to 7, **characterized in that** the bearing bush (46) is produced as a portion of a bar material.

## Revendications

1. Pompe, en particulier pompe à carburant haute pression, comprenant au moins un élément de pompe (10) qui présente un poussoir à galet (20) dans lequel un galet (42) est supporté à rotation sur un boulon de palier (44) par le biais d'une douille palier (46), lequel galet roule sur une came (22) d'un arbre d'entraînement (24), **caractérisée en ce que** la douille palier (46) est fabriquée à partir de matériau en plastique.

2. Pompe selon la revendication 1, **caractérisée en ce que** la douille palier (46) est fabriquée en PEEK, polyétheréthercétone.

3. Pompe selon la revendication 1, **caractérisée en ce que** la douille palier (46) est fabriquée en PPA, polyphtalamide.

4. Pompe selon la revendication 1, **caractérisée en ce que** la douille palier (46) est fabriquée en PPS, sulfure de polyphénylène.

5. Pompe selon la revendication 1, **caractérisée en ce que** la douille palier (46) est fabriquée en polyimide ou en polyamidimide.

6. Pompe selon l'une quelconque des revendications 1 à 5, **caractérisée en ce qu'**au moins une charge destinée à améliorer les propriétés de fonctionnement d'urgence de la douille palier (46) en cas de faible lubrification est ajoutée au matériau en plastique de la douille palier (46).

7. Pompe selon la revendication 6, **caractérisée en ce que** l'on utilise en tant que charge des fibres de carbone et/ou des fibres de verre et/ou du titanate de potassium et/ou du polyaramide et/ou du dioxyde de titane et/ou du sulfure de zinc et/ou du graphite et/ou du polytétrafluoroéthylène.

8. Pompe selon l'une quelconque des revendications précédentes, **caractérisée en ce que** la douille palier (46) est fabriquée par un procédé de moulage par injection.

9. Pompe selon l'une quelconque des revendications 1 à 7, **caractérisée en ce que** la douille palier (46) est fabriquée par un procédé de pressage.

10. Pompe selon l'une quelconque des revendications 1 à 7, **caractérisée en ce que** la douille palier (46) est fabriquée sous forme de portion d'un matériau en barre.
